# EUROPÄISCHE PATENTSCHRIFT

(11) **EP 2 764 992 B1**
(45) Veröffentlichungstag und Bekanntmachung des Hinweises auf die Patenterteilung: **17.06.2020**
(21) Anmeldenummer: 13154619.4
(22) Anmeldetag: 08.02.2013
(51) Int. Cl.: B32B 1/08, F16L 11/00, F16L 11/08

(54) **FLEXIBLER SCHLAUCH**
FLEXIBLE HOSE
TUYAU FLEXIBLE

(43) Veröffentlichungstag der Anmeldung: 13.08.2014
(73) Patentinhaber: ContiTech MGW GmbH, 34346 Hannoversch-Münden (DE)
(72) Erfinder: Seibold, Sebastian, 34346 Hann. Münden (DE); Rajasekara, Michael, 34346 Hann. Münden (DE); Westenberg, Hauke, 48147 Münster (DE); Reinhard, Horst, 36282 Hauneck (DE); Stuhrmann, Dirk, 21031 Hamburg (DE); Bennett, Paul, Nottingham, Nottinghamshire NG93JN (GB); Memarian, Houshang, Horley, Surrey RH6 0BJ (GB)
(74) Vertreter: Preusser, Andrea

(56) Entgegenhaltungen:
- EP-A1- 0 641 965
- EP-A1- 1 396 670
- EP-A1- 2 177 348
- EP-A2- 1 013 979
- WO-A2-2008/058732
- DE-A1- 10 241 914
- DE-A1- 19 907 325
- DE-A1-102004 051 073
- DE-A1-102008 055 480
- US-A1- 2009 169 790

## Beschreibung

### Flexibler Schlauch

Die Erfindung betrifft einen flexiblen Schlauch, insbesondere für die Anwendung als Ladeluftschlauch.

Um die Verbindung von Turbolader zu Ladeluftkühler (heiße Seite) und die Verbindung von Ladeluftkühler zum Motor (kalte Seite) herzustellen, werden zumeist sogenannte Ladeluftschläuche eingesetzt. Sowohl die heiße als auch die kalte Seite müssen hierbei relativ hohen Druckbedingungen standhalten, als auch so flexibel ausgerüstet sein, dass sie die Relativbewegung zwischen Motor und Ladeluftkühler ausgleichen können. Vergleichbare Anforderungen werden auch an weitere Schläuche, wie bspw. Industrieschläuche gestellt, die sich ebenso hohen Druckverhältnissen und unterschiedlichen Temperaturverhältnissen anpassen müssen.

Ladeluftschläuche für Ladeluftleitungen sind bereits hinreichend bekannt.
EP 101 397 9 A2 offenbart zum Beispiel einen Schlauch, z.B. einen Ladeluftschlauch, der druck- und hochtemperaturfest ist, einfach herstellbar ist und der einen einfachen Einbau bei der Motormontage erlaubt. Der Schlauch weist hierzu endseitig jeweils eine vorgeformte Muffe auf, wobei die Muffe eine Prägung in Form einer umlaufenden Nut besitzt. Beispielsweise ist aus DE 10 2008 055 480 A1 ein Ladeluft- und Kühlwasserschlauch bekannt, der sich durch gute Druckbeständigkeit und Flexibilität auszeichnet. Hierbei wird auf eine elastomere Innenschicht als eine erste Schicht ein schlauchförmiges Gestrick oder Geflecht als eine zweite Schicht aufgebracht und anschließend auf diese beiden Schichten eine beidseitig gummierte Textillage aufgewickelt.

Nachteilig bei der Verwendung eines schlauchförmigen Gestrickes ist, dass es zur Erlangung einer guten Druckbeständigkeit eine bestimmte Mindestdicke haben muss, was häufig durch Verarbeitung eines dickeren Garns erzielt wird. Ein dickeres Garn bedingt allerdings wiederum Haftungsprobleme. Oder es wird ein Doppelgestrick verwendet, was häufig mit höheren Kosten durch Beschaffung weiterer Extruder und geeigneter Strickmaschinen verbunden ist. In beiden Fällen erlangt der gesamte Schlauch einen größeren Durchmesser und eine nicht mehr akzeptable Steifigkeit.
Die höhere Steifigkeit führt zusätzlich dazu, dass das Herstellen eines gekrümmten Schlauches nur noch schwer möglich ist.

Die Verwendung von eingebetteten Festigkeitsträgerlagen in Schläuchen und anderen elastomeren Artikeln ist z. B. auch aus US 2009/0169790 A1 bekannt, Dort wird ein Schlauch für die biopharmazeutische Anwendung offenbart, bei dem sich um eine Innenschicht herum eine Außenschicht und ggfs. auch noch eine Zwischenschicht befinden, wobei in die Außenschicht ein Festigkeitsträger eingebettet ist.
EP 2 177 348 A1 offenbart einen Schlauch für den Pharma- und Lebensmittelbereich, der mehrlagig ausgebildet ist, d.h. neben der Innenschicht und der Außenschicht noch wenigstens eine Zwischenschicht und eine Festigkeitsträgerschicht enthält.
In EP 0 641 965 A1 wird ein schlauchförmiger Hohlkörper, insbesondere ein Dampfschlauch, ein Kompensator und eine Luftfeder beschrieben, wobei der schlauchförmige Hohlkörper hohen Feuchten und hohen Temperaturen ausgesetzt ist und aus einer Innen- und Außenschicht aus elastomerem Werkstoff und einem eingebetteten ein- oder mehrlagigen Festigkeitsträger sowie ggfs. aus einer oder mehreren zusätzlichen Zwischenschichten aus elastomerem Werkstoff besteht.
DE 10 2004 051 073 A1 wiederum offenbart ein Elastomerprodukt, welches zumindest eine zwischen Elastomerlagen vorliegende Verstärkungslage aus textilen Festigkeitsträgern aufweist. Das Elastomerprodukt ist hierbei insbesondere ein Schlauch für hohe, dynamische und thermische Belastung.
Der Schlauch, welcher in EP 1 396 670 A1 offenbart wird, zeichnet sich durch hohe dynamische Belastungen, speziell extremer Schwingungsbelastung, bei hohen Temperaturen aus und durch eine sichere Anbindung der Fluorelastomer-Innenschicht an die Silikonelastomer-Zwischenschicht. Hierzu ist die Fluorelastomer-Innenschicht sowohl bisphenolisch als auch peroxidisch vernetzt. Der Schlauch dabei kann ebenso eine Festigkeitsträgerlage enthalten, welche sich üblichereweise zwischen den einzelnen Lagen des mehrlagigen Schlauches befindet.
In WO 2008/05 87 32 A2 wird ein rohrförmiges Formteil mit einer Wandung beschrieben, das eine hohe Druckfestigkeit und eine hohe mechanische Stabilität bei guter Temperaturbeständigkeit und guter chemischer Beständigkeit aufweist. Das rohrförmige Formteil ist hierbei ein starres Kunststoffrohr.

Der Erfindung liegt daher die Aufgabe zugrunde, insbesondere von DE 10 2008 055 480 A1 ausgehend, einen flexiblen Schlauch bereitzustellen, der sich einerseits durch eine gute Flexibilität und durch eine ausreichende Druckbeständigkeit auszeichnet, andererseits eine Steifigkeit aufweist, die es ermöglicht verschiedene Krümmungsgeometrien herzustellen. Gleichzeitig soll die Komplexität bei der Herstellung des Schlauches nicht erhöht, sondern bevorzugt erniedrigt werden.

Die Erfindung wird dadurch gelöst, dass der Schlauch eine elastomere Innenschicht und wenigstens eine gummierten Textillage enthält, wobei wenigstens eine gummierte Textillage unmittelbar auf die elastomere Innenschicht aufgewickelt ist und wobei die elastomere Innenschicht (1) eine elastisch ausgebildete extrudierte Innenschicht ist, und wobei die Innenschicht (1) aus wenigstens einem Fluorpolymer besteht und wobei das Fluorpolymer Poly(vinylidenfluorid-co-hexafluorpropylen) (VDF/HFP) ist.

Es hat sich überraschend gezeigt, dass durch einen derartigen Schlauchaufbau eine hervorragende Flexibilität erreichen lässt, wodurch sich verschiedene Krümmungsgeometrien herstellen lassen. Gleichzeitig ist weiterhin eine ausreichende Druckbeständigkeit gegeben.

In einer besonders bevorzugten Ausführungsform besteht der Schlauch aus einer elastomeren Innenschicht und wenigstens einer gummierten Textillage, wobei wenigstens eine gummierte Textillage auf die elastomere Innenschicht aufgewickelt ist.
Es ist allerdings möglich, dass sich auf der gewickelten gummierten Textillage noch wenigstens eine weitere Schicht, bspw. in Form einer Beschichtung, befindet.

Bei der Innenschicht handelt es sich um eine extrudierte Innenschicht, die zusätzlich noch elastisch ausgebildet ist.
Die Innenschicht enthält wenigstens ein Fluorpolymer wobei als Fluorpolymer. Poly(vinylidenfluorid-co-hexafluorpropylen) (VDF/HFP) verwendet wird.
Die Innenschicht kann hierbei als Fluorpolymermischung ausgestaltet sein, d.h. eine Polymermischung, die neben wenigstens einem Fluorpolymer noch weitere Bestandteile wie Füllstoffe, Weichmacher, etc. enthalten kann.

Die gummierte Textillage ist vorzugsweise beidseitig gummiert, wobei für bestimmte Anwendungsbereiche auch eine einseitige Gummierung denkbar ist.
Die Gummierung selbst ist hierbei auf der Basis wenigstens einer Kautschukkomponente aufgebaut. Als Kautschukkomponenten sind insbesondere zu nennen: Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ) und /oder Fluorsilikonkautschuk (FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Polyurethan (PU).

Als besonders gut geeignet hat sich Silikonkautschuk und hier insbesondere VMQ gezeigt. Dabei zeigt sich eine besonders gute dynamische Stabilität bei hohen Temperaturen.
Die genannten Kautschukkomponenten können alleine oder im Verschnitt mit wenigstens einer weiteren Kautschukkomponente eingesetzt werden.
Es ist aber auch möglich, dass ein Verschnitt aus Kautschukkomponente und thermoplastischen Elastomeren und / oder Thermoplasten vorliegt. Grundsätzlich können dabei alle thermoplastischen Elastomere und / oder Thermoplaste eingesetzt werden.

Die Textillage der gummierten Textillage kann ein so genanntes "woven fabric", "knitted fabric" oder "non-woven Fabric" sein.
Als "woven fabric" werden üblicherweise Gewebe bezeichnet, bei der die textile Lage durch Verkreuzen von zwei Fadensystemen, nämlich Kette und Schuß, hergestellt wird. Als "knitted fabric" werden üblicherweise Gestricke oder Gewirke bezeichnet, bei denen eine mittels Faden gebildete Schleife in eine andere Schleife hineingeschlungen ist. Die auf diese Weise entstehenden Maschen können unter Verwendung eines oder mehrer Fäden gebildet werden.
Als "non-woven fabric" werden zumeist Vliese, Filze oder Watten bezeichnet, bei denen die Fasern durch ihre eigene Haftung zusammengehalten werden.
Vorteilhafterweise handelt es sich bei der Textillage um ein Gewebe, welches gemeinsam mit der Gummierung kalandriert ist.
Gewebelagen lassen sich in der Regel mit der Gummierung zusammen besser kalandrieren. Eine zusätzlich erhöhte Druckbeständigkeit lässt sich durch dickere Einzelfäden im Gewebe erzielen oder dadurch, dass die kalandrierte Gewebeplatte mehrfach um die Innenschicht gewickelt wird. Im Vergleich zu den eingangs erwähnten extrudierten reinen Gestricklagen sind keine zusätzlichen Investkosten für weitere notwendigen Maschinen notwendig und auch die Wandstärke des Gesamtschlauches steigt durch das Kalandrieren im Vergleich zur Extrusion nicht so deutlich an.
Ebenso ist der Abstand zwischen den Gewebeschichten deutlich geringer als bei einem Doppelgestrick.

Als Werkstoffe für die Textillage können alle der fachkundigen Person bekannten Werkstoffe eingesetzt werden. In Frage kommen bspw. Polyamid (PA), z.B. PA6, PA6.6, PA11, PA12, PA6.10, PA6.12, Polyimid (PI), Aramid, insbesondere para-Aramid oder meta-Aramid, Polyvinylacetal (PVA), Polyvinylalkohol (PVAL), Polyetheretherketon (PEEK), Polyester, insbesondere Polyethylentherephthalat (PET) oder Polyethylen-2,6-naphthalat (PEN), Polysulfon (PSU), Polyoxadiazol (POD), Polyphenylen oder Polyphenylenderivat, wie Polyphenylensulfid (PPS) oder Polyphenylenoxid (PPO), Polybenzoxazol (PBO), Baumwolle, Basalt, Metall, Kohlenstoff, Wolle, Zellwolle, Sisal, Hanf, Flachs, Rayon oder weitere Naturfasern oder Glasfasern sein. Auch Hybridkonzepte, d.h. Mischformen der genannten, können zum Einsatz gelangen, beispielsweise in Form eines Mischzwirns aus m- und p-Aramid oder aus PPS und PA. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber der Gummierung beiträgt.

Die gummierte Textillage kann auf Stoß oder überlappend gewickelt sein.
Bevorzugt ist die gummierte Textillage überlappend gewickelt. Dies führt zwar zu einer dickeren Wandstärke im Überlappungsbereich, zeigt aber deutliche Vorteile bezüglich der Haltbarkeit.
Sie kann einfach oder mehrfach um die Innenschicht gewickelt sein, je nach Druckanforderung. Bevorzugt ist sie umfangsmäßig verlaufend gewickelt bzw. unter einem definierten Winkel spiralisiert um die Innenschicht gewickelt.

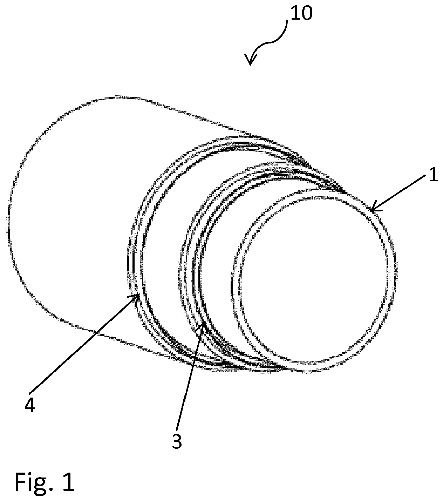

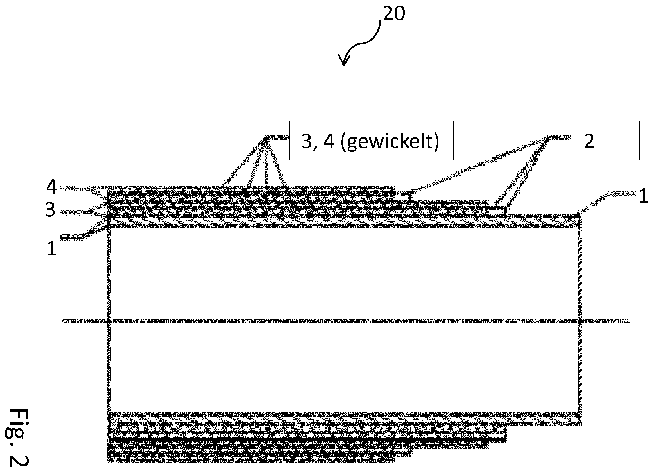

Die Erfindung wird nachstehend anhand von einem Beispiel aus dem Stand der Technik (Fig. 1) und einem weiteren Ausführungsbeispiel (Fig. 2) unter Zuhilfenahme zweier Figuren näher erläutert.
Es zeigen:
- Fig. 1: schematisch einen aufgebauten bzw. konfektionierten Ladeluftschlauch 10 mit einer Innenschicht 1 aus einer nahtlos extrudierten PTFE-Folie und einer ersten gummierten Textillage 3, welche unmittelbar auf die Innenschicht 1 gewickelt ist und einer zweiten gummierten Textillage 4, welche auf die erste gummierte Textillage gewickelt ist. Die gummierten Textillagen 3, 4 sind kalandriert und bestehen aus VMQ und m-Aramid.
- Fig. 2: einen Längsschnitt durch einen Ladeluftschlauch 20. Die erste gummierte Textillage 3 ist doppelt, d.h. 2-fach, unmittelbar auf die Innenschicht 1 gewickelt, während die zweite gummierte Textillage 4 einmal, d.h. 1-fach, auf die erste gummierte Textillage 3 gewickelt ist. Die Textillagen 2 der gummierten Textillagen 3, 4 sind in diesem Längsschnitt ebenso dargestellt.

### Bezugszeichenliste (Teil der Beschreibung)

- 10, 20: Schlauch, bevorzugt Ladeluftschlauch
- 1: Innenschicht
- 2: Textillage, bevorzugt Gewebe, der gummierten Textillagen
- 3: erste gummierte Textillage, gewickelt
- 4: zweite gummierte Textillage, gewickelt

## Patentansprüche

1. Flexibler Schlauch (10, 20), **dadurch gekennzeichnet, dass** er eine elastomere Innenschicht (1) und wenigstens eine gummierten Textillage (3, 4) enthält, wobei wenigstens eine gummierte Textillage (3, 4) unmittelbar auf die elastomere Innenschicht (1) aufgewickelt ist und wobei die elastomere Innenschicht (1) eine elastisch ausgebildete extrudierte Innenschicht ist, und wobei die Innenschicht (1) aus wenigstens einem Fluorpolymer besteht und wobei das Fluorpolymer Poly(vinylidenfluorid-co-hexafluorpropylen) (VDF/HFP) ist.

2. Flexibler Schlauch (10, 20) nach Anspruch 1, **dadurch gekennzeichnet, dass** die gummierte Textillage (3, 4) als Textillage ein Gewebe enthält.

3. Flexibler Schlauch (10, 20) nach einem der Ansprüche 1 bis 2, **dadurch gekennzeichnet, dass** die Gummierung der gummierten Textillage (3, 4) auf der Basis von Silikonkautschuk ist.

## Claims

1. Flexible hose (10, 20), **characterized in that** it comprises an elastomeric internal layer (1) and at least one rubberized textile ply (3, 4), there being at least one rubberized textile ply (3, 4) wound directly onto the elastomeric internal layer (1), and where the elastomeric internal layer (1) is an extruded internal layer configured to have elastic properties, and where the internal layer (1) is composed of at least one fluoropolymer, and where the fluoropolymer is poly(vinylidenefluoride-co-hexafluoropropylene) (VDF/HFP).

2. Flexible hose (10, 20) according to Claim 1, **characterized in that** the rubberized textile ply (3, 4) comprises, as textile ply, a woven fabric.

3. Flexible hose (10, 20) according to any of Claims 1 to 2, **characterized in that** the rubberization of the rubberized textile ply (3, 4) is based on silicone rubber.

## Revendications

1. Tuyau flexible (10, 20), **caractérisé en ce qu'**il contient une couche interne élastomère (1) et au moins une couche textile (3, 4) caoutchoutée, au moins une couche textile (3, 4) caoutchoutée étant enroulée directement sur la couche interne élastomère (1) et la couche interne élastomère (1) étant une couche interne extrudée formée de manière élastique, et la couche interne (1) étant constituée d'au moins un fluoropolymère et le fluoropolymère étant un poly(fluorure de vinylidène-co-hexafluoropropylène) (VDF/HFP).

2. Tuyau flexible (10, 20) selon la revendication 1, **caractérisé en ce que** la couche textile (3, 4) caoutchoutée contient un tissu en tant que couche textile.

3. Tuyau flexible (10, 20) selon l'une quelconque des revendications 1 à 2, **caractérisé en ce que** le caoutchoutage de la couche textile (3, 4) caoutchoutée est à base de caoutchouc de silicone.
